Europäisches Patentamt

European Patent Office

Office européen des brevets

(19)

(11)  EP 0 676 080 B1

(12)  **EUROPÄISCHE PATENTSCHRIFT**

(45)  Veröffentlichungstag und Bekanntmachung des Hinweises auf die Patenterteilung:
**12.03.1997  Patentblatt 1997/11**

(21)  Anmeldenummer: **94901954.1**

(22)  Anmeldetag: **04.12.1993**

(51)  Int Cl.⁶: **G11B 15/48**, G11B 27/19

(86)  Internationale Anmeldenummer:
**PCT/EP93/03413**

(87)  Internationale Veröffentlichungsnummer:
**WO 94/15337 (07.07.1994 Gazette 1994/15)**

(54)  **VERFAHREN UND VORRICHTUNG ZUR REGELUNG EINER BANDGESCHWINDIGKEIT**

PROCESS AND DEVICE FOR TAPE SPEED CONTROL

PROCEDE ET DISPOSITIF PERMETTANT DE REGULER LA VITESSE DE DEFILEMENT D'UNE BANDE

(84)  Benannte Vertragsstaaten:
**DE ES FR GB IT**

(30)  Priorität: **22.12.1992  DE 4243329**

(43)  Veröffentlichungstag der Anmeldung:
**11.10.1995  Patentblatt 1995/41**

(73)  Patentinhaber: **DEUTSCHE THOMSON-BRANDT GMBH**
**78048 Villingen-Schwenningen (DE)**

(72)  Erfinder: **MACE, Philippe**
**D-78078 Kappel (DE)**

(56)  Entgegenhaltungen:
**EP-A- 0 176 301          WO-A-81/01902**

- **Patent Abstracts of Japan, Band 9, Nr 285, P-404, Zusammenfasung von JP, 60- 124050 (FUJITSU K.K.),**
- **IBM Technical Disclosure Bulletin, Band 14, No. 4, September 1971, H. Martin,**
- **"INTERBLOCK GAP GENERATION" S**
- **IBM Technical Disclosure Bulletin, Band 15, No. 11, April 1973, D. D. Larsson et al, "CAPSTAN SERVO CONTROL" S**

**Beschreibung**

Die vorliegende Erfindung betrifft ein Verfahren und eine Vorrichtung zur Steuerung der Geschwindigkeit eines Bandes zur Aufzeichnung und/oder Wiedergabe von Informationen gemäß dem jeweiligen Oberbegriff der Ansprüche 1 und 7. Das Verfahren und die Vorrichtung sind aus dem JBM TDB, Vol.14, No.4, Sept. 1971, S.1173 u. 1174 bekannt.

Bekannte Betriebsmodi, in denen ein Band zur Aufzeichnung und/oder Wiedergabe von Informationen an vorbestimmten Positionen zum Stillstand kommen soll, sind beispielsweise der sogenannte Zeitlupen-Betrieb und der Einzelbild-Modus eines Video-gerätes. Dabei wird ein Videoband von einem Videokopf derart abgetastet, daß einzelne auf diesem Videoband aufgezeichnete Bild- und/oder Toninformationen jeweils für eine vorgegebene Zeit t ausgelesen werden. Dafür wird das Band soweit gespult, daß die Informationen für ein erstes Bild räumlich in dem Bereich des Videokopfes gelangen. Nach der Zeit t wird das Band derart weitergespult, daß Informationen für ein nächstes Bild in dem Bereich des Videokopfes anliegen. Später kann die Wiedergabe eines weiteren Bildes folgen, usw.

Dabei ist es wichtig, daß das Band möglichst genau derart zum Stillstand gelangt, daß jeweils der Beginn der jeweiligen Bildinformationen genau mit dem Bereich des Videokopfes zusammenfällt. Das bedeutet insbesondere, daß bei jedem Ende des Weiterspulens ein genau geführter Verzögerungs- oder Bremsvorgang eingeleitet werden muß, damit ein präziser Bandstillstand gewährleistet ist.

Bekannte Geräte, wie beispielsweise Videogeräte, leiten nach einer vorgegebenen Weiterspulzeit einen Bremsvorgang ein, bei dem Bremsmittel, wie ein Motor, eine mechanische Bremse oder dergleichen, mit fest vorgegeben Ansteuersignalen angesteuert werden. Das heißt, daß Toleranzen, die beispielsweise bedingt sind durch Fertigungstoleranzen des Gerätes, durch verschiedene Videobänder, durch Temperatureffekte und dergleichen, nicht berücksichtigt werden.

Es ist die Aufgabe der vorliegenden Erfindung, den Verlauf eines Bremsvorganges der genannten Art derart weiterzuentwikkeln, daß ein Band zur Aufzeichnung und/oder Wiedergabe von Informationen möglichst genau an vorgegeben Positionen zum Stillstand gelangt.

Diese Aufgabe wird gelöst durch ein Verfahren nach Anspruch 1 und durch eine Vorrichtung gemäß dem ersten Vorrichtungsanspruch.

Vorteilhafte Weiterbildungen sind durch die Unteransprüche gekennzeichnet.

Die Erfindung wird in den folgenden Ausführungsbeispielen anhand der Zeichnung erläutert. Dabei zeigen:

Fig. 1 :       ein Blockschaltbild eines bevorzugten Ausführungsbeispieles;

Fig. 2 :       die symbolische Darstellung von einem Video band;

Fig. 3, 4, 6 :       Verläufe von Geschwindigkeitswerten eines Videobandes bei dem Ausführungsbeispiel der Fig. 1;

Fig. 5, 7 :       Verläufe von Motoransteuerspannungen während eines Abbremsvorganges.

Bevor auf die Beschreibung der Ausführungsbeispiele näher eingegangen wird, sei darauf hingewiesen, daß die in den Figuren einzeln dargestellten Blöcke lediglich zum besseren Verständnis der Erfindung dienen. Üblicherweise sind einzelne oder mehrere dieser Blökke zu Einheiten zusammengefaßt. Diese können in integrierter oder Hybridtechnik oder als programmgesteuerter Mikrorechner, bzw. als Teil eines zu seiner Programmierung geeigneten Programmes realisiert sein. Die in den einzelnen Stufen enthaltenen Elemente können jedoch auch getrennt ausgeführt werden.

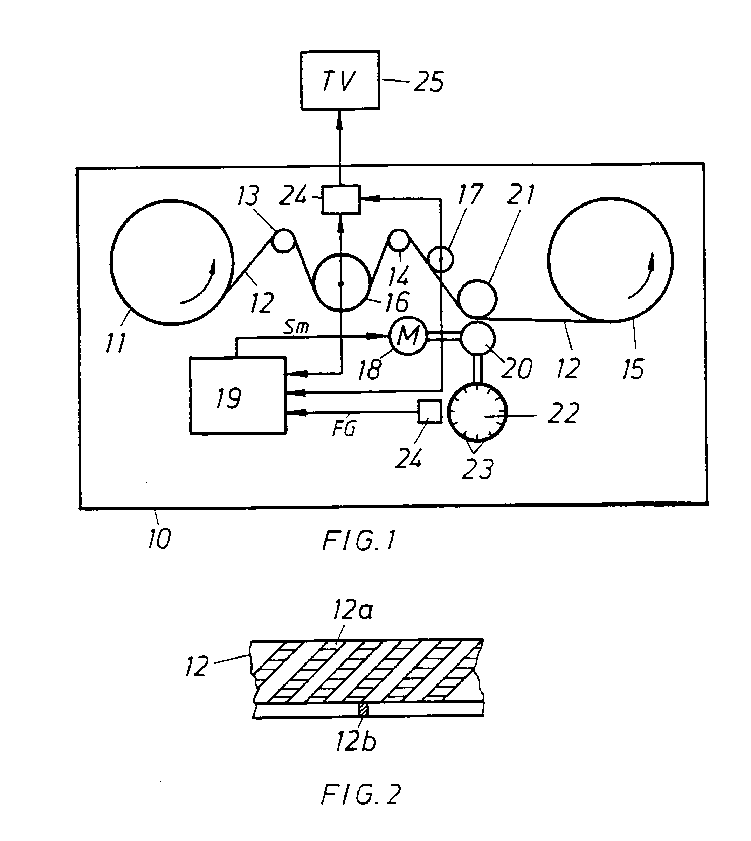

Fig. 1 zeigt das Blockschaltbild eines ersten Ausführungsbeispieles, in dem mit 10 symbolisch ein Videorekorder angedeutet ist. Dieser enthält eine erste Spule 11, von der ein Videoband 12 über Ablenkrollen 13, 14 auf eine zweite Spule 15 gewickelt wird. Das Videoband 12 wird an einem Videokopf 16 und an einem Lesekopf 17 vorbeigeführt. Die Geschwindigkeit des Bandes 12 wird durch einen Antriebsmotor 18, auch Capstanmotor genannt, gesteuert, der entsprechende Steuersignale Sm von einem elektronischen Steuergerät 19 erhält. Der Motor 18 ist mechanisch verbunden, beispielsweise über Antriebsriemen oder dergleichen, mit einem Antriebsrad 20, das mit einer Gegenrolle 21 den Transport des Bandes 12 mit einer vorgegebenen Geschwindigkeit bewirkt. Diese kann gemessen werden mittels eines Tachorades 22, auf dem äquidistante Marken 23 aufgebracht sind. Diese können beispielsweise optisch oder magnetisch sein und werden detektiert von einem Sensor 24, der als optischer Sensor, Hallsensor oder dergleichen ausgebildet ist und sein Ausgangssignal FG an das Steuergerät 19 abgibt.

Wie in Fig. 2 symbolisch dargestellt, sind auf dem Videoband 12 außer den Videoinformationen 12a auch Kontrollimpulse 12b an einer vorgegebenen Position bezüglich der Videoinformation 12a gespeichert. Während der Videokopf 16 die Videosignale 12a ausliest und diese über entsprechende Verarbeitungsstufen 24 an ein Anzeigerät 25, wie beispielsweise einen Fernseher, weiterleitet, empfängt der Lesekopf 17 die Kontrollsignale 12b. Zusätzlich kann er derart ausgebildet sein, daß er Audiosignale des Bandes 12 empfängt. Die Signale des Lesekopfes 17 werden an das elektronische Steuergerät 19 und an die Verarbeitungsstufen 24 geleitet.

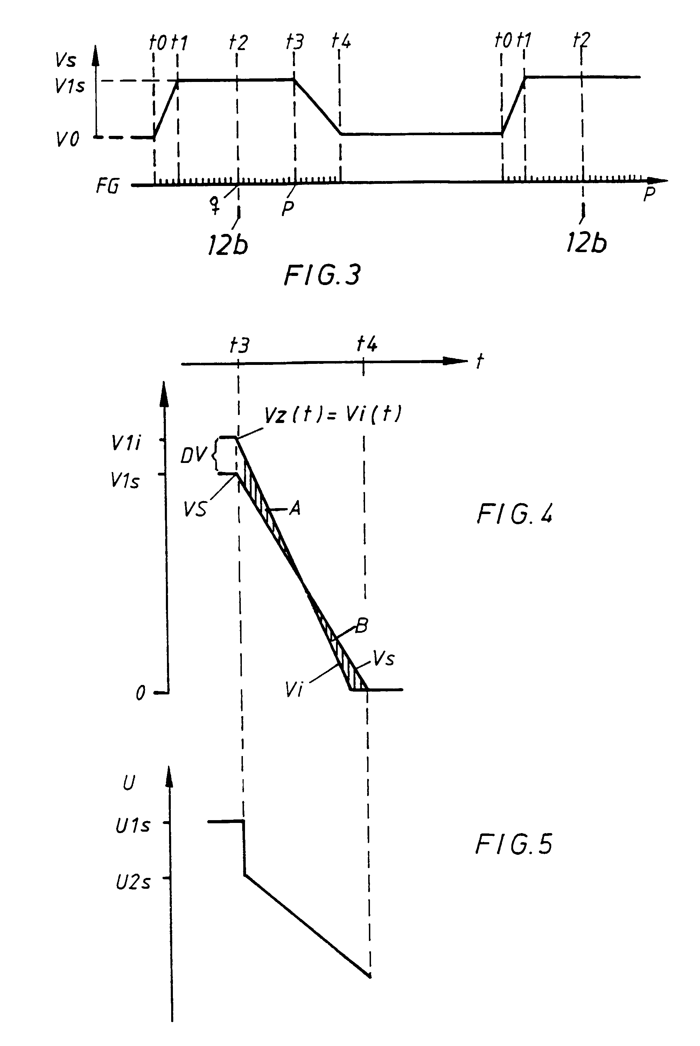

Die oberste Kurve der Fig. 3 zeigt den Verlauf der Soll-Geschwindigkeit Vs des Bandes 12 während eines Zeitlupenbetriebes an. Nachdem ein Videobild eine vorgegebene Zeitdauer ausgelesen wurde, wird der Motor 18 zu einem Zeitpunkt t0 von den Steuergerät 19 derart angesteuert, daß das Band 12 in einem Zeitintervall t0-t1 von v0 = 0 auf v1 beschleunigt und dann zunächst mit dieser Geschwindigkeit weitertransportiert wird. Zu einem Zeitpunkt t2 detektiert der Lesekopf 17 das Kontrollsignal 12b und ab einem Zeitpunkt t3 wird der Motor 18 durch das Steuergerät 19 abgebremst. Der Sollverlauf der Abbremsung ist derart, daß das Band 12 zum Zeitpunkt t4 zum Stillstand (v0) kommt. Danach bleibt das Band 12 für einen vorgegeben Zeitraum t4-t0 stehen.

Während des ganzen Betriebes empfängt das Steuergerät 19 die Signale FG, wobei die Anzahl der Impulse pro Zeiteinheit mit steigender Geschwindigkeit v zunimmt. Dabei ist die Anzahl der aufgetretenen Impulse ein Maß für die Ist-Anzahl von Undrehungen der Antriebsrolle 20 und damit im wesentlichen auch für die Ist-Länge des transportierten Bandes 12. Der zeitliche Abstand zwischen zwei Impulsen ist ein Naß für die Ist-Geschwindigkeit der Antriebsrolle 20 und damit im wesentlichen auch des Bandes 12.

Um Istwerte, das heißt einen tatsächlichen Verlauf, der weitergespulten Bandlänge und der Geschwindigkeit Vi möglichst genau auf die Sollwerte zu regeln, arbeitet das Ausführungsbeispiel nach dem im folgenden näher beschriebenen Verfahren.

Wesentlich für den Zeitlupen-Betrieb, für einen Einzelbildmodus und dergleichen ist, daß das Band 12 zur Zeit t4 jeweils an einer vorgegebenen Stelle zum Stillstand kommt. Um mögliche Fehler in der Anfangsphase (t0-t3) zu kompensieren, wird bei Auftreten des Impulses 12b zum Zeitpunkt t2 ein Zähler gestartet, der in dem Steuergerät 19 enthalten ist, und der von einer Zahl q ausgehend mit jedem neuen Impuls von FG um einen Wert zurückzählt. Das heißt, mit dem Auftreten des Impulses 12b hat das Steuergerät 19 einen Wert zur Verfügung, der ein Maß ist für die verbleibende Bandlänge bis zum Stillstand des Bandes 12. Wenn der rückwärtszählende Zähler einen Wert p erreicht hat, so leitet das Steuergerät 19 den Abbremsvorgang ein. Auf die Regelung der Bandgeschwindigkeit während des Abbremsvorganges im Zeitraum t3-t4 beschränkt sich im wesentlichen die folgende Funktionsbeschreibung.

Es ist davon auszugehen, daß zum Zeitpunkt t3 die Ist-Geschwindigkeit Vi nicht exakt mit dem Sollwert V1s übereinstimmt. Der Geschwindigkeits-Istwert V1i kann beispielsweise oberhalb von V1 liegen, wie in Fig. 4 dargestellt. Damit das Band 12 spätestens zum Zeitpunkt t4 derart abgebremst wird, daß es mit der Bandrestlänge p zum Stillstand kommt, wird der Verlauf Vz(t) von Zielgeschwindigkeiten durch das Steuergerät 19 ermittelt, auf die die tatsächlichen Geschwindigkeits-Istwerte Vi(t) geregelt werden. in Fig. 4 wird davon ausgegangen, daß der Verlauf der Zielgeschwindigkeiten Vz(t) gleich dem Verlauf der Ist-Geschwindigkeiten Vi(t) entspricht.

Wie bereits erwähnt, ist es wesentlich, daß das Band 12 an einer vorgegebenen Position zum Stillstand kommt. Der Geschwindigkeitsverlauf spielt dabei im Prinzip nur eine zweitrangige Rolle. Da jedoch

$$Vi(t) = dLi/dt$$

mit :

Vi (t) = Band-Istgeschwindigkeit und
dLi/dt = weitergespulte Bandlänge pro Zeiteinheit

ist, läßt sich über die Regelung der Geschwindigkeit Vi (t) auch die Länge Li des zurückgelegten Bandes bestimmen. Die gewünschte Regelung der Länge L wird erzielt, indem eine Regelung bezüglich dem Integral zwischen der Kurve Vi und der Kurve Vs realisiert wird. Das heißt die in Fig. 4 dargestellte Fläche A muß gleich der Fläche B sein.

Mathematisch ausgedrückt läßt sich das durch folgende überlegungen erreichen. Die Soll-Geschwindigkeit Vs(t) im Zeitintervall t3-t4 wird durch folgende Gleichung bestimmt:

$$Vs(t) = V1s - k * t ; \qquad k : \text{Steigung.} \qquad (1)$$

Die Steigung k kann für verschiedene Betriebsarten, wie beispielsweise normale Zeitlupe, Zeitlupe von Longplay-Aufnahmen, Wiedergabe nach Stillstand, Suchlauf oder dergleichen, gleich oder unterschiedlich sein. Wenn k gleich ist, sc braucht man weniger Speicher und die im folgenden näher beschriebenen Verfahrensschritte sind für die genannten Betriebsarten ähnlich.

Der Verlauf der Zielwerte Vz(t) wird angegeben durch

$$Vz(t) = V1s + DV - (k + Dk) * t \qquad (2)$$

mit

V1 + DV = V1i und
k + Dk : Steigung von Vz(t)

Das Steuergerät 19, in dem der Verlauf von Vs(t) abgespeichert ist, ermittelt durch elementare mathematische Berechnung

$$Dk = DV/V1s * (2 + DV/V1s) * k. \qquad (3)$$

Eine entsprechende Regelung der Istwerte Vi(t) auf den Verlauf der Zielwerte Vz(t) wird durch das Steuergerät 19 durch Auswertung der impulse FG und durch Ansteuerung des Motors 18 bewirkt. Es ist jedoch auch möglich, den Motor 18 nur zu steuern, anstatt zu regeln.

Wird zur Ansteuerung des Motors 18 von einer Spannungs-An-steuerung ausgegangen, so kann der Werte-Verlauf der entsprechenden Ansteuerspannung U(t) aufgrund folgender überlegungen bestimmt werden.

Ausgegangen wird von der allgemein bekannten Gleichnung

$$U = R * I + E + L * dl/dt \qquad (4a)$$

mit

R : Innenwiderstand
I : durch die Motorwindungen fließender Strom
E : Gegeninduktionsspannung,
L : Induktivität des Motorswobei

$$E = a * v \qquad (5)$$

a : Motor-Konstante,
v : Drehgeschwindigkeit des Motors.

Da üblicherweise davon ausgegangen werden kann, daß L/R wesentlich kleiner ist als die mechanische Zeitkonstante des Motors, vereinfacht sich die Gleichung (1a) zu

$$U = R * I + E \qquad (4)$$

Der Strom I ist proportional zu dem Drehmoment D, d.h.

$$I = c * D \qquad ( c = Konstante), \qquad (6)$$

und das Drehmoment D ist

$$D = r + J * dv/dt \qquad (7)$$

mit

r : Maß für Reibungsverluste
J : Drehmomentmasse
v : Drehgeschwindigkeit des Motors.

Somit ergibt sich

$$U - r = a * v + b * dv/dt \qquad (8)$$

mit

$$b = c * J * R = Konstante. \qquad (8a)$$

Wenn eine Geschwindigkeit Vs(t) = V1s - k*t (s.

Gleichung (1)) realisiert werden soll, dann muß das Ansteuersignal U(t) die Form

$$U(t) = f*t + g \qquad (9)$$

haben (siehe auch Gleichubg (8)). Umgekehrt ergibt sich aus einer Steuerung der Form

$$U(t) = f*t + g \qquad (9)$$

durch Lösen der Gleichung (8) für Vs(t)

$$Vs(t) = X + Y * t * C * exp(-t * a/b). \qquad (10)$$

mit

X = a + f
Y = (g*a - f*b)/a²
C : Konstante, die durch Anfangsbedingungen festgelegt ist.

Zur Zeit t=0 ergibt sich

$$V = Y + C = V1s + DV. \qquad (11)$$

Um C = 0 zu erzielen, muß

$$Y = V1s + DV$$

sein.

Damit ergibt sich zur Realisierung des Verlaufes Vs (t), wie er in Fig. 4 dargestellt ist, folgender Verlauf Us (t) für die Ansteuerspannung des Motors 18, wie er in Fig. 5 dargestellt ist:

- Zum Einleiten des Abbremsvorganges zum Zeitpunkt t3 springt Us von einem Anfangswert U1s, der zur Verwirklichung der Bandgeschwindigkeit V1s erforderlich ist, auf einen Wert

$$U2s = U1s - b * k; \qquad (b \text{ Konstante, siehe oben})$$

- anschließend wird U mit der Steigung

$$-a*k$$

heruntergeregelt, wobei

a, b    die bereits genannten Motor-Konstanten und

k    derjenige Wert ist, mit dem auch die Sollgeschwindigkeit Vs(t) im Zeitintervall t3-t4 heruntergefahren wird (s. Gleichung (1)).

Damit ergibt sich also für den Verlauf von U(t) im Zeitintervall t3-t4:

$$U(t) = U1s - b*k - a*k*t. \qquad (12)$$

Die Motor-Konstanten a und b sind gegebene Größen und können einfach ermittelt werden. Damit kann auch der Sprung und der anschließende Verlauf leicht bestimmt werden. Ergibt sich, wie bereits Mithilfe von Fig. 4 erläutert, daß das Band 12 zu dem Zeitpunkt t3 nicht die Geschwindigkeit V1s, sondern eine davon abweichende Geschwindigkeit V1i aufweist, so ist in der obigen Gleichung anstelle von k der Wert k + Dk einzusetzen.

Ergänzend sei erwähnt, daß in diesen Konstanten auch der Übertragungsweg zwischen dem Motor 18 und dem Band 12 berücksichtigt werden muß.

Außerdem sind jedoch Toleranzen für die beiden Konstanten a, b zu berücksichtigen. Diese hängen vom Videogerät, der verwendeten Videokassette, der Temperatur und dergleichen ab. Die jeweils relevanten Werte können durch adaptive Verfahren neu ermittelt werden. Ein Beispiel für ein derartiges Verfahren wird im folgenden beschrieben.

Der Verlauf U(t) in Fig. 5 kann entweder durch eine reine Steuerung realisiert werden oder durch eine Kombination von Steuerung und Regelung. Dazu kann bevorzugterweise der Sprung und/oder der darauffolgende Verlauf, bzw. ein Teil davon, vorab gesteuert werden. Das heißt es können entsprechende Stützpunkte verwendet werden. Der weitere Verlauf kann durch eine Regelung optimiert werden, wodurch ein geregelter Sprung Sp und ein geregelter Verlauf SI ermittelt wird. Aus dem dadurch resultierenden Gesamtverlauf Sp+SI im Intervall t3-t4 können die Konstanten a und/oder b genauer bestimmt werden. Die entsprechenden Werte dieser Konstanten können für weitere Steuerungsvorgäänge abgespeichert werden. Dabei kann eine Abhängigkeit dieser Werte von dem verwendeten Videoband, von dessen Position, von der Temperatur, von dem Videogerät und/oder von sonstigen Parametern berücksichtigt werden. Entsprechende Ausgangswerte können bereits vorab ab Werk eingespeichert sein.

Die Werte von a und b können auch dazu dienen, um andere Betriebsgrößen einzustellen. Eine derartige Betriebsgröße ist beispielsweise die Begrenzung des Stromes zur Ansteuerung des Motors 18. Diese überlegung ergibt sich aufgrund der Gleichungen (4) und (5).

Insbesondere seien zur Korrektur von a und b folgende Verfahren genannt:

1. Der durch Regelung bestimmten Wert

$$SI = dU/dt$$

wird so geregelt, daß

$$dv/dt = -(k+Dk)$$

ist. Wird der tatsächliche Wert

$$dv/dt = k_{ist}$$

genannt, und der tatsächliche Wert

$$a = a_{ref'}$$

dann ist zu jeder Zeit

$$SI = a_{ref} * k_{ist'}$$

wobei $k_{ist}$ und SI bekannt sind. Daraufhin wird

$$SI/k_{ist}$$

gebildet. Wenn

$SI/k_{ist}$ größer als a ist, so wird a erhöht; falls $SI/k_{ist}$ kleiner als a ist, so wird a vermindert.

a wird bevorzugterweise Schritt für Schritt verfeinert und nicht gemäß der Beziehung a = SI/$k_{ist}$ berechnet.

Wenn b nicht richtig bestimmt ist, dann tritt ein exponentieller Restanteil auf und es gilt

$$SI \text{ ungefähr } a_{ref} * k_{ist'}$$

Deshalb sollten relative Schritte von a, das heißt da/a, kleiner sein als relative Schritte von b, wie unter dem unter 2. beschriebenen Verfahren erläutert.

2. Falls der Verlauf der geregelten Ansteuerspannung U(t) zu Beginn des Intervalls t3-t4 größer ist als am Ende dieses Intervalls und falls die Ist-Geschwindigkeiten Vi den Zielgeschwindigkeiten Vz an Anfang und am Ende entsprecehen, so wird ein Wert b1 durch einen Wert b2 ersetzt, der größer ist als b1; und umgekehrt. (Dieses ergibt sich aus der notwendigen Korrektur des Exponentialterms).

Ergänzend sei erwähnt, daß bei der bisherigen Beschreibung des Verfahrens von einer festen Kopplung des Bandes 12 mit dem Motor 18 ausgegangen wurde. In der Praxis werden sich jedoch Abweichungen ergeben, die beispielsweise durch einen Schlupf, durch Elastizitäten eines Antriebsbandes und/oder des Videobandes 12 und dergleichen verursacht werden können. Diese Abweichungen können erkannt werden, beispielsweise aufgrund registrierter Impulse des Signales FG zu einem vorgegebenen Zeitpunkt, und ausgeglichen werden beispielsweise durch eine Korrektur des Zeitpunktes t3 und/oder durch eine Veränderung der Soll-Steigung k.

Das bis hierher beschriebene Verfahren, welches durch das Ausführungsbeispiel der Fig. 1 realisiert werden kann, kann besonders dann eingesetzt werden, wenn eine geringe Auflösung durch die Impulse des Signales FG vorliegt und/oder wenn eine grobe zeitliche Auflösung zur Verfügung steht. Liegen hierfür bessere Bedingungen vor, so wird bevorzugterweise das im folgenden beschriebene Verfahren eingesetzt, das bei entsprechender Ausgestaltung des Steuergerätes 19 ebenfalls von dem Ausführungsbeispiel der Fig. 1 realisiert werden kann.

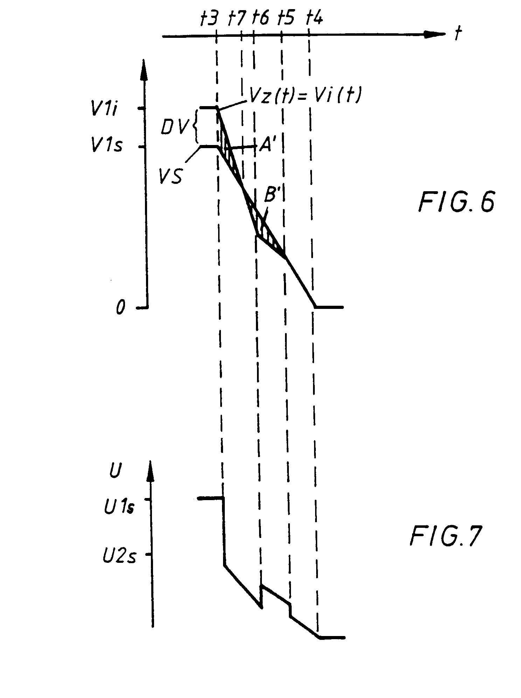

Wie in Fig. 6 ersichtlich, erfolgt bei dem jetzt beschriebenen Verfahren ein vollständiger Ausgleich der Wirkung der verschiedenen Geschwindigkeiten V1s, V1i nicht erst am Ende des Abbremsvorganges, sondern bereits vorher zu einem Zeitpunkt t5, der irgendwo im Zeitintervall t3-t4 liegen kann.

Das hat den Vorteil, daß eventuelle Abweichungen bei der bereits vorgespulten Bandlänge im Zeitintervall t5-t4 durch ein Regelungsverfahren noch kompensiert werden können. Außerdem findet zum Zeitpunkt t4 unabhängig von der Geschwindigkeit V1i stets ein übergang zum Stillstand im wesentlichen mit dem gleichen Geschwindigkeitsverlauf statt. Dabei sei von möglichen Regelungsschwankungen abgesehen. Dadurch sind die Unterschiede von durch Schlupf und Elastizität bedingten Fehlern ähnlich. Diese können für einen Gerätetyp teilweise vorab in Abhängigkeit von der Temperatur, Bandlänge, Bandpositicn und/oder dergleichen bestimmt und durch einfache Maßnahmen teilweise kompensiert werden. Da die tatsächliche Abbremszeit der durch den Verlauf von Vs(t) vorgegebenen Abbremszeit entspricht, wird die Synchronisation mit dem Videokopf 16 verbessert.

Bei einer bevorzugten Ausführungsform ist t5 derart gewählt, daß es nach zwei Dritteln im Zeitraum t3-t4 liegt. Zunächst erfolgt die Bestimmung des Verlaufs von Vz(t) im Intervall t3-t6 (siehe Fig. 6) gemäß

$$Vz(t) = V1s + DV - (k + d'k) * t.$$

Das heißt, es muß d'k bestimmt werden. Ein Minimalwert für d'k, der verwendet wird, falls t5 mit t4 identisch sein soll, ist

$$d'k_{min} = (1 + 2^{0,5}) * k * Dv/V1s.$$

Falls jedoch die Länge der Phase t5-t4 ein Drittel der gesamten Abbremszeit t3-t4 betragen soll, wie in der bevorzugten Ausführungsform, so ist

$$d'k = 1,5 * (1 + 2^{0,5}) * k * DV/V1s.$$

Der Fehler der vorgespulten Bandlänge ist am größten, wenn die Kurve Vz(t) die Kurve Vs(t) schneidet, also wenn

$$V1s - k*t = V1s + DV - (k + d'k)*t.$$

Der entsprechende Zeitpunkt t7 ergibt sich somit zu

$$t7 = t3 + DV/d'k.$$

Der Zeitpunkt t6, in dem der maximale Fehler zur Hälfte kompensiert ist, errechnet sich durch

$$t6 = t3 + t7 * (1 + 1/2^{0,5}).$$

Der Zeitpunkt t6 kann jedoch auch durch ein Regelungsverfahren derart bestimmt werden, daß der maximale Fehler zu diesem Zeitpunkt zur Hälfte kompensiert ist. Die Korrektur des restlichen Fehlers im Bereich t6-t5 wird erzielt durch einen Verlauf der Kurve Vz(t)

$$Vz(t) = M - (k - d'k) * t$$

mit

$$M = V1s - Dv * (1 + 2^{0,5}).$$

Dabei ist t5 gegeben durch

$$t5 = t3 + t7 * (1 + 2^{0,5}).$$

Ab dem Zeitpunkt t5, in dem der Fehler in der weitergepulten Bandlänge theoretisch Null ist, verläuft die Kurve Vz(t) gleich wie die Kurve Vs(t). Die tatsächlichen Geschwindigkeits-Istwerte Vi(t) werden auf die Kurve Vz(t) geregelt. Dabei können allgemein bekannte Regelungsverfahren verwendet werden, die eine Proportional-, Integral- und/oder Differentialregelung vorsehen. Eventuelle Regelabweichungen sind in diesem Ausführungsbeispiel so gering, daß sie in Fig. 6 nicht dargestellt sind.

Fig. 7 zeigt den Verlauf der Ansteuerspannung des Motors 18 für das in Fig. 6 dargestellte Verfahren.

Zur Kompensation der bereits genannten Exponentialterme ist bei jeder Änderung der Steigung von Vz(t) ein Spannungssprung vorgesehen. Zum Zeitpunkt t3 erfolgt ein erster Sprung Sp1 mit

$$Sp1 = -b * (k + d'k)$$

und anschließend ein Verlauf Sl1 mit

$$Sl1 = -a * (k + d'k).$$

Zum Zeitpunkt t6 ist ein zweiter Sprung Sp2 vorgesehen mit

$$Sp2 = +b * 2 * d'k$$

und ein zweiter Verlauf Sl2

$$Sl2 = -a * (k - d'k).$$

Dem dritten Sprung Sp3 zum Zeitpunkt t5

$$Sp3 = -b * d'k$$

folgt der Verlauf Sl3

$$Sl3 = -a * k.$$

Auch bei dem zweiten Ausführungsbeispiel kann der Verlauf U(t) entweder durch eine reine Steuerung realisiert werden oder durch eine Kombination von Steuerung und Regelung.

Bei einer weiteren Version dieses Ausführungsbeispieles kann der Zeitpunkt t6 bei späteren Abbremsphasen in Abhängigkeit von der tatsächlich verbliebenden Band-Restlänge L(t5), bzw. in Abhängigkeit von der Differenz

$$DL(t6) = L(t5) - L_{ref}(t5)$$

zum Zeitpunkt t5 gemäß folgender Bedingungen verschoben werden:

a) wenn DL(t5) * d'k kleiner ist als Null, wird t6 vorverlegt,
b) wenn DL(t5) * d'k größer ist als Null, folgt t6 später.

Ein Abbruchkriterium für t6-t5 kann sein, wenn V(t) = Vz(t) oder L(t) = Lz(t) ist.

Alternativ zu der Korrektur von t6, kann im Intervall T6-t5 folgendes durchgeführt werden. Es wird die Ist-Position Li und die Ist-Geschwindigkeit Vi zu einer Zeit t' gemessen, die irgendwo innerhalb des Intervalls t6-t5 liegt. Für diese Zeit t' wird ein neuer Wert k' bestimmt, der anstelle des bisherigen Wertes k - Dk verwendet wird. Wenn die Kurve V für dV/dt = -k' die Sollgeschwindigkeit Vs = V1s - k∗t bei t5 trifft, dann sollen auch die Positionen L(t) und $L_{soll}$(t). Die Bestimmung des geeigneten Wertes k' ergibt folgende Berechnung

$$k' = \frac{2*k*(L(t')-V(t')*t') - (V(t')-V1s)^2}{2*(L(t')-t'*V1s) + k * t'^2}$$

Diesem K' kann ein Offset zugefügt werden, der dazu dient, den Irrtum der Position nach dem überschwingen nach t5 auszugleichen. Dieser Offset kann von einem Schritt (t0-t4) zum anderen korrigiert werden.

In der letzten Phase (t5-t4) des Abbremsvorganges kann eine Regelung aufgrund des Geschwindigkeitsverlaufs vorgesehen sein oder zusätzlich auch eine weitere Regelung bezüglich der Band-Restlänge erfolgen.

Versionen der genannten Ausführungsbeispiele können zumindest eine der folgenden Variationen aufweisen:

- das genaue Abbremsen des Videobandes 12 kann auch zur Aufnahme von Informationen dienen. Dieses können Erstaufnahmen sein oder sonstige, wie beispielsweise das Nachvertonen oder Einblenden bei bereits vorab aufgezeichneten Bildern;
- anstatt das Videoband 12 anzuhalten, können auch andere Bänder an vorgegebenen Positionen gestoppt werden. Diese Bänder können zur Aufnahme und/oder Wiedergabe von Informationen, wie Daten, Bilder und/oder Ton, aufgrund von optischen, elektrischen und/oder magnetischen Verfahren geeignet sein;
- es können Fehler, die bedingt sind durch Schlupf, Elastizität oder dergleichen des Bandes oder von sonstigen Mitteln des Gerätes, dadurch ausgeglichen werden, daß der Beginn der Abbremsphase (t4) verändert wird und/oder daß der Verlauf Vs(t) oder Vz(t) verändert wird. So kann beispielsweise der Verlauf Vs(t) wie folgt gewählt werden:

$$Vs'(t) = k / (T+t)^2; \qquad T \text{ ist Konstante};$$

- Fehler beim Auslesen der Band-Informationen können automatisch ermittelt werden;
- der Verlauf von Vs(t) bzw. Vz(t) kann derart gewählt werden, daß mathematische Verfahren vereinfacht durchgeführt werden können;
- die Abbremsphasen können auch für einen schnellen Suchlauf und/oder für ein schnelles Umspulen verwendet werden, falls das Band an einer vorbestimmten Position zum Stillstand kommen soll;

- Falls der Motor 18 nicht durch eine Gleichspannung gesteuert wird, sondern durch eine gepulste Spannung, wie beispielsweise durch Pulsweitenmodulation (PWM), Pulslängenmodulation (PLM) oder durch andere Ansteuersignale, so ist die Umrechnung von den Geschwindigkeitsverläufen in die Ansteuersignale entsprechend vorzunehmen;

- der Verlauf der Ansteuersignale für den Motor 18 kann auch dazu verwendet werden, eine reine Regelung zu verwirklichen. Das heißt, es wird nicht ein Sprung bei t3, t5 und/oder t6 durchgeführt. Eine bevorzugte Lösung dieser Idee ist folgende überlegung. Ausgehend von der Gleichung

$$L_{soll} = V1s * t - (1/2) * k * t^2$$

mit : $L_{soll}$ : Bandsollänge,

die sich aus Gleichung (1) ergibt, wird ab t3 bei jedem Impuls des Signales FG die dazugehörige Ist-Bandposition $L_{ist}$ (p, p-1,...p-n,...0) und die dazugehörige Zeit (t3,...t4) bestimmt. Der Differenzwert

$$DL = L_{soll} - L_{ist}$$

dient beispielsweise zur Bestimmung folgender Regelgrößen für eine PID-Regelung:

$$Kp * DL + Kd * (DL/dt) + Ki * Integral(DL * dl)$$

mit:

Kp, Kd, Ki :   Regelkonstanten für Proportional-,
Differential-, bzw. Integralregelung
Integral(..) :   Einfach- oder Doppelintegral.

Die Verwendung des Doppelintegrals hat den Vorteil, daß die entsprechende Regelung genauer und schneller ist.

## Patentansprüche

1. Verfahren zur Steuerung der Geschwindigkeit eines Bandes zur Aufzeichnung und/oder Wiedergabe von Informationen, wobei das Band von einer ersten Geschwindigkeit (V1s) ab einem ersten Zeitpunkt (t3) während eines Abbremsvorganges gemäß eines vorgegebenen Soll-Geschwindigkeitsverlaufes (Vs(t)) an vorgegebenen Positionen zum Stillstand kommen soll, indem die tatsächliche Bandgeschwindigkeit (V1i) zum ersten Zeitpunkt (t3) gemessen wird und daraufhin ein Ziel- Verlauf (Vz(t)) von Geschwindigkeitswerten bestimmt wird, gemäß dem die Geschwindigkeits-Istwerte (Vi(t)) während des Abbremsvorganges gesteuert oder geregelt werden, **dadurch gekennzeichnet,** daß der Ziel-Verlauf (Vz(t)) der Geschwindigkeitswerte derart bestimmt wird, daß der Integralwert des Ziel-Verlaufs (Vz(t)) im wesentlichen dem Integralwert des Soll-Verlaufs (Vs(t)) entspricht.

2. Verfahren nach Anspruch 1, **dadurch gekennzeichnet,** daß der Ziel-Verlauf (Vz(t)) vor Beendigung des Abbremsvorganges (t3-t4) in den Soll-Verlauf (Vs(t)) übergeht.

3. Verfahren nach einem der Ansprüche 1 oder 2, **dadurch gekennzeichnet**, daß die Abbremsung im wesentlichen erfolgt aufgrund einer entsprechenden Ansteuerung des Motors, der auch vor dem Abbremsvorgang die Bandgeschwindigkeit bestimmt und daß die Ansteuersignale für diesen Motor derart erzeugt werden daß ein Abbremsen gemäß des Ziel-Verlaufes (Vz(t)) erfolgt.

4. Verfahren nach einem der Ansprüche 1 bis 3, **dadurch gekennzeichnet,** daß Größen, die als Stützwerte für eine Regelung dienen, wie beispielsweise die Werte der Sprünge Sp und der Verläufe Sl, durch ein adaptives Verfahren bestimmt werden.

5. Verfahren nach einem der Ansprüche 1 bis 4, **dadurch gekennzeichnet**, daß Parameter (a, b), die aus dem Regelverhalten gewonnen werden auch zur Steuerung und/oder Regelung anderer Betriebsgrößen dienen.

6. Verfahren nach einem der Ansprüche 1 bis 5, **dadurch gekennzeichnet,** daß Fehler, die durch Elastizitäten oder durch Schlupf im Band oder von anderen Mittel bewirkt sind, durch die Bestimmung des Beginns (t3) des Abbremsvorgangs und/oder durch den Ziel-Verlauf (Vz(t)) zumindest teilweise ausgeglichen werden.

7. Vorrichtung zur Steuerung der Geschwindigkeit eines Bandes (12) zur Aufzeichnung und/oder Wiedergabe von Informationen, wobei Bremsmittel (18, 20) vorgesehen sind, die von Steuermitteln (19) derart angesteuert werden, daß das Band (12) von einer ersten Geschwindigkeit (V1s) ab einem ersten Zeitpunkt (t3) während eines Abbremsvorganges gemäß eines vorgegebenen Soll-Geschwindigkeitsverlaufes (Vs(t)) an vorgegebenen Positionen zum Stillstand kommt, indem Tachomittel (22, 24, 19) vorgesehen sind, die die tatsächliche Bandgeschwindigkeit (V1i) zum ersten Zeitpunkt (t3) messen, so daß das Steuergerät (19) daraufhin ein Ziel-Verlauf (Vz(t)) von Geschwindigkeitswerten bestimmt und demgemäß die Bremsmittel (18, 20) ansteuert, so daß Geschwindigkeits-Istwerte (Vi(t))

während des Abbremsvorganges gemäß dem Ziel-Verlauf gesteuert oder geregelt werden, dadurch gekennzeichnet, daß das Steuermittel (19) den Ziel-Verlauf (Vz(t)) der Geschwindigkeitswerte derart bestimmt, daß der Integralwert des ZielVerlaufs (Vz(t)) im wesentlichen dem Integralwert des Soll-Verlaufs (Vs(t)) entspricht.

8. Vorrichtung nach Anspruch 7, **dadurch gekennzeichnet,** daß das Steuermittel den Ziel-Verlauf (Vz(t)) derart bestimmt, daß er vor Beendigung des Abbremsvorganges (t3-t4) in den Soll-Verlauf (Vs(t)) übergeht.

9. Vorrichtung nach einem der Ansprüche 7 oder 8, **dadurch gekennzeichnet,** daß die Abbremsung im wesentlichen erfolgt aufgrund einer entsprechenden Ansteuerung des Motors (18), der auch vor dem Abbremsvorgang die Bandgeschwindigkeit bestimmt und daß die Ansteuersignale für diesen Motor (18) von dem Steuermittel (19) derart erzeugt werden daß ein Abbremsen gemäß des Ziel-Verlaufes (Vz(t)) erfolgt.

10. Vorrichtung nach einem der Ansprüche 7 bis 9, **dadurch gekennzeichnet**, daß Mittel (19) vorgesehen sind, die Größen, die als Stützwerte für eine Regelung dienen, durch ein adaptives Verfahren bestimmen.

11. Vorrichtung nach einem der Ansprüche 7 bis 10, **dadurch gekennzeichnet**, daß Mittel (19) vorgesehen sind, die Parameter (a, b) aus dem Regelverhalten bestimmen und diese auch zur Steuerung und/oder Regelung anderer Betriebsgrößen verwenden.

12. Vorrichtung nach einem der Ansprüche 7 bis 11, **dadurch gekennzeichnet,** daß Fehler, die durch Elastizitäten oder durch Schlupf im Band oder von anderen Mittel bewirkt sind, durch die Bestimmung des Beginns (t3) des Abbremsvorgangs und/oder durch den Ziel-Verlauf (Vz(t)) zumindest teilweise ausgeglichen werden.

**Claims**

1. Method for controlling the speed of a tape for the recording and/or reproduction of items of information, wherein, from a first speed (V1s) and as from a first time point (t3), the tape is intended to come to a stop at predetermined positions during a braking process in accordance with a predetermined reference speed waveform (Vs(t)) in that the actual tape speed (V1i) is measured at the first time point (t3) and thereupon a target waveform (Vz(t)) of speed values is determined, in accordance with which the actual values of the speed (Vi(t)) are controlled or regulated during the braking process, characterized in that the target waveform (Vz(t)) of the speed values is determined in such a way that the integral value of the target waveform (Vz(t)) substantially corresponds to the integral value of the reference waveform (Vs(t)).

2. Method according to Claim 1, characterized in that the target waveform (Vz(t)) merges into the reference waveform (Vs(t)) before the ending of the braking process (t3-t4) .

3. Method according to either of Claims 1 and 2, characterised in that the braking basically occurs by reason of a corresponding control of the motor which is determining the speed of the tape also before the braking process and in that the control signals for this motor are generated in such a way that a braking occurs in accordance with the target waveform (Vz(t)).

4. Method according to one of Claims 1 to 3, characterized in that quantities which serve as data values for a regulation, such as the values of the steps Sp and the waveforms Sl for example, are determined by an adaptive process.

5. Method according to one of Claims 1 to 4, characterized in that parameters (a, b) which are obtained from the regulating behaviour also serve for the control and/or regulation of other operating quantities.

6. Method according to one of Claims 1 to 5, characterized in that errors which are caused by elasticities or by slippage of the tape or by other means are, at least partly, balanced out by determining the beginning (t3) of the braking process and/or by the target waveform (Vz(t)).

7. Apparatus for controlling the speed of a tape (12) for the recording and/or reproduction of items of information, wherein there are provided braking means (18, 20) which are controlled by control means (19) in such a way that, from a first speed (V1s) and as from a first time point (t3), the tape (12) comes to a stop at predetermined positions during a braking process in accordance with a predetermined reference speed waveform (Vs(t)), in that there are provided tachometer means (22, 24, 19) which measure the actual tape speed (V1i) at the first time point (t3), so that thereupon the control device (19) determines a target waveform (Vz(t)) of speed values and, in accordance therewith, controls the braking means (18, 20), so that actual speed values (Vi(t)) are controlled or regulated during the braking process in accordance with the target waveform, characterized in that the control means (19) determines the target waveform (Vz(t)) of the speed values in such a way that the integral value of the target waveform (Vz(t)) substantially corresponds to the integral value of the reference waveform (Vs(t)).

8. Apparatus according to Claim 7, characterized in that the control means determines the target waveform (Vz(t)) in such a way that it merges into the reference waveform (Vs(t)) before the ending of the braking process (t3-t4) .

9. Apparatus according to either of Claims 7 and 8, characterized in that the braking basically occurs by reason of a corresponding control of the motor (18) which is determining the speed of the tape also before the braking process and in that the control signals for this motor (18) are generated by the control means (19) in such a way that a braking occurs in accordance with the target waveform (Vz(t)).

10. Apparatus according to one of Claims 7 to 9, characterized in that there are provided means (19) which determine quantities which serve as data values for a regulation by an adaptive process.

11. Apparatus according to one of Claims 7 to 10, characterized in that there are provided means (19) which determine parameters (a, b) from the regulating behaviour and also use these for the control and/or regulation of other operating quantities.

12. Apparatus according to one of Claims 7 to 11, characterized in that errors which are caused by elasticities or by slippage of the tape or by other means are, at least partly, balanced out by determining the beginning (t3) of the braking process and/or by the target waveform (Vz(t)).

**Revendications**

1. Méthode de commande de la vitesse de défilement d'une bande lors de l'enregistrement et/ou de la lecture d'informations, ladite bande devant s'arrêter à une première vitesse (V1s) à un premier instant (t3) lors d'un processus de ralentissement conformément à une courbe théorique de vitesse (Vs(t)) prédéfinie, à des positions prédéfinies, où la vitesse effective de défilement de la bande (V1i) est mesurée au premier instant (t3), une courbe cible (Vz(t)) des vitesses étant ensuite déterminée, en fonction de laquelle les vitesses réelles (Vi(t)) seront commandées ou régulées pendant le processus de ralentissement, **méthode caractérisée en ce que** la courbe cible (Vz(t)) des vitesses est définie de manière à ce que la valeur intégrale de la courbe cible (Vz(t)) corresponde essentiellement à la valeur intégrale de la courbe théorique (Vs(t)).

2. Méthode conforme à la Revendication 1, **caractérisée en ce que** la courbe cible (Vz(t)) coupe la courbe théorique (Vs(t)) avant la fin du processus de ralentissement (t3-t4).

3. Méthode conforme à l'une des Revendications 1 ou 2, **caractérisée en ce que** le ralentissement s'effectue en partie sur la base d'une commande correspondante du moteur, qui détermine également la vitesse de défilement de la bande avant le ralentissement, et en ce que les signaux de commande dudit moteur sont générés de manière à ce que le ralentissement s'effectue conformément à la courbe cible (Vz(t)).

4. Méthode conforme à l'une des Revendications 1 à 3 **caractérisée en ce que** les grandeurs qui servent de valeurs de référence pour une régulation, comme par exemple les valeurs des écarts Sp et des courbes SL, sont déterminées par un processus adaptatif.

5. Méthode conforme à l'une des Revendications 1 à 4, **caractérisée en ce que** les paramètres (a, b) issus du comportement de régulation servent également à commander et/ou réguler d'autres grandeurs fonctionnelles.

6. Méthode conforme à l'une des Revendications 1 à 5, **caractérisée en ce que** les erreurs imputables au phénomène d'élasticité ou de glissement dans la bande, ou de tous autres moyens, sont compensées au moins en partie par la détermination du début (t3) du processus de ralentissement et/ou de la courbe cible (Vz(t)).

7. Dispositif de commande de la vitesse de défilement d'une bande (12) pour l'enregistrement et/ou la lecture d'informations, intégrant des moyens de ralentissement (18, 20), pilotés par des moyens de commande (19), de manière à ce que la bande (12) s'arrête à une première vitesse (V1s) à un premier instant (t3), pendant un processus de ralentissement conformément à une courbe de vitesse théorique prédéfinie (Vs(t)), aux positions prédéterminées, des moyens tachymétriques (22, 24, 19) destinés à mesurer la vitesse de défilement effectif de la bande (V1i) à un premier instant (t3), de manière à ce que le dispositif de commande (19) détermine ensuite une courbe cible (Vz(t)) de vitesses, et pilote des moyens de ralentissement (18, 20) en conséquence, de manière à ce que les vitesses réelles soient commandées ou régulées pendant le processus de ralentissement, sur la base de la courbe cible, **caractérisé en ce que** le moyen de commande (19) détermine la courbe cible (Vz(t)) des vitesses de manière à ce que la valeur intégrale de la valeur cible (Vz(t)) corresponde principalement à la valeur intégrale de la courbe théorique (Vs(t)).

8. Dispositif conforme à la Revendication 7, **caractérisé en ce que** le moyen de commande détermine la courbe cible (Vz(t)) de manière à ce que ladite courbe se confonde avec la courbe théorique (Vs(t)) avant la fin du processus de ralentissement (t3-t4).

9. Dispositif conforme à l'une des Revendications 7 ou 8, **caractérisé en ce que** le ralentissement s'effectue principalement sur la base d'un pilotage adéquat du moteur (18), qui détermine également la vitesse de défilement de la bande avant le processus de ralentissement, et en ce que les signaux de commande de ce moteur (18) sont générés par le moyen de commande (19) de manière à entraîner un ralentissement conformément à la courbe cible (Vz(t)).

10. Dispositif conforme à l'une des Revendications 7 à 9, **caractérisé en ce que** des moyens (19) qui déterminent, par un processus adaptatif, les grandeurs des valeurs de référence d'une régulation. sont prévus.

11. Dispositif conforme à l'une des Revendications 7 à 10, **caractérisé en ce que** des moyens (19), qui déterminent les paramètres (a, b) à partir du comportement de régulation, et utilisent également lesdits paramètres pour commander et/ou réguler d'autres grandeurs fonctionnelles, sont prévus.

12. Dispositif conforme à l'une des Revendications 7 à 11, **caractérisé en ce** les erreurs imputables à des phénomènes d'élasticité ou de glissement dans la bande ou de tous autres moyens, sont compensées au moins en partie par une détermination du début (t3) du processus de ralentissement et/ou par l'intermédiaire de la courbe cible (Vz(t)).

FIG.1

FIG.2

FIG.3

FIG.4

FIG.5

FIG.6

FIG.7